# EUROPEAN PATENT APPLICATION

(11) **EP 3 937 536 A1**
(43) Date of publication of application: **12.01.2022**
(21) Application number: 20923675.1
(22) Date of filing: 17.07.2020
(51) Int. Cl.: H04W 28/02, H04W 28/16

(54) **METHOD FOR TERMINAL TO TRANSMIT AND RECEIVE DATA BY USING MULTIPLE LINKS AND TERMINAL**

(30) Priority: 29.05.2020 CN 202010473907
(71) Applicant: Chengdu Xgimi Technology Co., Ltd, Chengdu, Sichuan 610041 (CN)
(72) Inventor: WU, Hao, Sichuan 610041 (CN); XIE, Fang, Sichuan 610041 (CN); LIAO, Yang, Sichuan 610041 (CN)
(74) Representative: Berggren Oy
(86) International application number: PCT/CN2020/102608
(87) International publication number: WO 2021/237899

(57) **Abstract**

A method for a terminal to transmit and receive data on multi-link, and a terminal are disclosed. The method includes: a message sent from a network access device is received, wherein the message contains parameters EHT Capability and EHT Operation, the parameter EHT Capability indicates a multi-link transmitting and receiving capability of the network access device, and the parameter EHT Operation indicates a multi-link operating mode of the network access device; and data transmitting and receiving is performed according to the parameter EHT Capability and the subfields of the parameter EHT Capability as well as the parameter EHT Operation and the subfields of the parameter EHT Operation. In the present application, according to detection of service data and link status of a network, the network access device notifies the terminal in the network of multi-link configuration in advance, and the terminal may dynamically perform multi-link configuration, so that wireless resources are reasonably used while high-rate services are ensured, and resource waste is avoided while service data transmission is ensured.

## Description

### Technical Field

The preset application relates to the field of communications, in particular to a method for a terminal to transmit and receive data on multi-link, and a terminal.

### Background

The 802.11 be network, also called an Extremely High Throughput (EHT) network, achieves extremely high throughput through a series of system characteristics and enhanced functions of multiple mechanisms. As the use of Wireless Local Area Network (WLAN) continues to grow, providing wireless data services in many environments (such as homes, enterprises, and hot spots) becomes increasingly important. In particular, video traffic will continue to be the main type of traffic in many WLAN deployments. Because of the emergence of 4K and 8K videos (uncompressed rate of 20 Gbps), requirements for throughput of these applications are developing. New applications with high throughput and low latency, such as virtual reality or augmented reality, game, remote offices and cloud computing, will increase sharply (for example, a real-time game has a latency of less than 5ms).

Given the high throughput and strict real-time latency requirements of these applications, users expect higher throughput, greater reliability, less latency and jitter, and higher power efficiency when their applications are supported through the WLAN. The users expect improved integration with a Time Sensitive Network (TSN) to support the applications over heterogeneous Ethernet and WLAN. The 802.11 be network is designed to ensure the competitiveness of WLAN by further increasing the total throughput and reducing the latency, while ensuring backward compatibility and coexistence with old technical standards. 802.11 compatible devices operate in frequency bands 2.4 GHz, 5 GHz and 6 GHz.

### Summary

Even terminals that require high-rate data transmission are not always performing services that require high-rate transmission. For example, when a mobile phone or a computer transmits high-definition video, it may require a very high data transmission rate. However, at other times, t resources of high-rate transmission data resources are not necessary. If data transmission links cannot be managed dynamically, a utilization rate of wireless resources cannot be increased as expected, on the contrary, it will cause great waste.

In order to achieve the above objective, embodiments of the present application provide the following technical solutions.

In a first aspect, a method for a terminal to transmit and receive data on multi-link is provided. The method includes: a message sent from a network access device is received, the message containing parameters EHT Capability and EHT Operation.

The parameter EHT Capability indicates a multi-link transmitting and receiving capability of the network access device, containing subfields ML enable and STR enable; ML enable indicates that whether the network access device supports a multi-link operation or not, STR enable indicates a multi-link mode that the network access device supports, and the supported multi-link mode includes a mode supporting multi-link simultaneous receiving or simultaneous transmitting, and a mode supporting multi-link independently simultaneous transmitting and receiving.

The parameter EHT Operation indicates a multi-link operating mode of the network access device, containing subfields Link set for Non-STR and Link set for STR, herein Link set for Non-STR is used for indicating a link set on which the terminal may perform multi-link simultaneous receiving or simultaneous transmitting in the mode of supporting multi-link simultaneous receiving or simultaneous transmitting, and Link set for STR is used for indicating a link set on which the terminal may perform multi-link independently simultaneous transmitting and receiving in the mode of supporting multi-link independently simultaneous transmitting and receiving; or containing a subfield Link set for ML that is used for indicating a link set on which the terminal is able to perform multi-link operation.

Data transmitting and receiving is performed according to the parameter EHT Capability and its subfields as well as the parameter EHT Operation and its subfields.

Exemplarily, the above-mentioned message refers to a Beacon message, or a trigger message, or a probe response message.

In a possible design method, a method for performing data transmitting and receiving according to the parameter EHT Capability and its subfields as well as the parameter EHT Operation and its subfields includes: setting local information according to the parameter EHT Capability and its subfields as well as the parameter EHT Operation and its subfields, and performing data transmitting and receiving according to the local information, herein the local information contains parameters Operating mode for ML, AP ML capability, and ML Operating set, Operating mode for ML indicates that whether the network access device supports a multi-link operation or not, AP ML capability indicates a multi-link mode that the network access device supports, and ML Operating set indicates an available link.

Exemplarily, a method for setting local information includes the following operations.

when the ML enable indicates supporting a single-link operation, a parameter value of the Operating mode for ML is set to Single link which indicates a single link.

When the ML enable indicates supporting a multi-link operation, a parameter value of the Operating mode for ML is set to Multi-link which indicates multiple links.

When the ML enable indicates supporting a multi-link operation, and STR enable indicates supporting multi-link simultaneous receiving or simultaneous transmitting, a parameter value of the AP ML capability is set to Non-STR which indicates multi-link simultaneous receiving or simultaneous transmitting.

When the ML enable indicates supporting a multi-link operation, and STR enable indicates supporting multi-link independently simultaneous transmitting and receiving, a parameter value of the AP ML capability is set to STR which indicates multi-link independently simultaneous transmitting and receiving.

When the ML enable indicates supporting a multi-link operation, the terminal supports multi-link independently simultaneous transmitting and receiving, and STR enable indicates supporting multi-link independently simultaneous transmitting and receiving, a parameter value of the ML Operating set is to a value of Link set for STR or Link set for ML.

When the ML enable indicates supporting a multi-link operation, the terminal supports multi-link synchronous independent receiving and transmitting, and STR enable indicates supporting multi-link simultaneous receiving or simultaneous transmitting, a parameter value of the ML Operating set is set to a value of Link set for Non-STR or Link set for ML.

When the ML enable indicates supporting a multi-link operation, and the terminal supports multi-link simultaneous receiving or simultaneous transmitting, a parameter value of the ML Operating set is set to a value of Link set for Non-STR or Link set for ML.

Exemplarily, a method for performing data transmitting and receiving according to local information includes the following operations.

When a value of the Operating mode for ML is Single link, data transmitting and receiving is performed on a single link.

When the value of Operating mode for ML is Multi-link, the terminal supports multi-link independently simultaneous transmitting and receiving, and a value of AP ML capability is Non-STR, multi-link simultaneous receiving or simultaneous transmitting of data is performed according to a link, or a frequency band, or a waveband indicated in ML Operating set.

When the value of Operating mode for ML is Multi-link, the terminal supports multi-link independently simultaneous transmitting and receiving, and the value of AP ML capability is STR, multi-link independently simultaneous transmitting and receiving of data is performed according to a link, or a frequency band, or a waveband indicated in ML Operating set.

When the value of Operating mode for ML is Multi-link, and the terminal supports multi-link simultaneous receiving or simultaneous transmitting, multi-link simultaneous receiving or simultaneous transmitting of data is performed according to a link, or a frequency band, or a waveband indicated in ML Operating set.

Optionally, a method for performing data transmitting and receiving on a single link includes: when the terminal performs transmitting and receiving on the single link currently, still performing transmitting and receiving on the original single link; when the terminal performs transmitting and receiving on multiple links currently, selecting one of a link, or a frequency band, or a waveband indicated in ML Operating set for transmitting and receiving.

In another possible design method, the method for performing data transmitting and receiving according to the parameter EHT Capability and its subfields as well as the parameter EHT Operation and its subfields includes the following operations.

When the ML enable indicates supporting a single-link operation, data transmitting and receiving is performed on a single link.

When the ML enable indicates supporting a multi-link operation, the terminal supports multi-link independently simultaneous transmitting and receiving, and STR enable indicates supporting multi-link independently simultaneous transmitting and receiving, multi-link independently simultaneous transmitting and receiving of data is performed according to a link, or a frequency band, or a wave band indicated in Link set for STR or Link set for ML.

When the ML enable indicates supporting a multi-link operation, the terminal supports multi-link independently simultaneous transmitting and receiving, and STR enable indicates supporting multi-link independently simultaneous transmitting and receiving, multi-link simultaneous receiving or simultaneous transmitting of data is performed according to a link, or a frequency band, or a wave band indicated in Link set for STR or Link set for ML.

When the ML enable indicates supporting a multi-link operation, and the terminal supports multi-link simultaneous receiving or simultaneous transmitting, multi-link simultaneous receiving or simultaneous transmitting of data is performed according to a link, or a frequency band, or a wave band indicated in Link set for Non-STR or Link set for ML.

Optionally, a method for performing data transmitting and receiving on a single link includes: when the terminal performs transmitting and receiving on the single link currently, still performing transmitting and receiving on the original single link; when the terminal performs transmitting and receiving on multiple links currently, selecting one of a link or a frequency band or a waveband indicated in Link set for Non-STR or Link set for ML for transmitting and receiving.

Optionally, the subfield STR enable in the parameter EHT Capability is valid when ML enable indicates that the network access device supports a multi-link operation.

In a second aspect, a terminal is provided, including a data transmitting and receiving device. The data transmitting and receiving device is configured to perform the method for a terminal to transmit and receive data on multi-link as described in any one of the possible implementation manners in the first aspect.

In the present application, the new parameters EHT Capability and EHT Operation are added to the message sent by the network access device, and these two new parameters are set reasonably; after receiving the message, the terminal sets the local parameters according to the parameters in the message and then performs data transmitting and receiving, or directly performs data transmitting and receiving. In the present application, according to detection of service data and link status of a network, the network access device notifies the terminal in the network of multi-link configuration in advance, and the terminal may dynamically perform multi-link configuration, so that wireless resources are reasonably used while high-rate services are ensured, and resource waste is avoided while service data transmission is ensured.

### Brief Description of the Drawings

Fig. 1 is a schematic diagram of a message setting mode according to Embodiment 1 of the present application.
Fig. 2 is a schematic diagram of a setting mode of a parameter EHT Capability according to an embodiment of the present application.
Fig. 3 is a schematic diagram showing multi-link simultaneous receiving or simultaneous transmitting according to an embodiment of the present application.
Fig. 4 is a schematic diagram showing multi-link independently simultaneous transmitting and receiving according to an embodiment of the present application.
Fig. 5 is schematic diagram of a setting mode of a parameter EHT Operation according to an embodiment of the present application.
Fig. 6 is a schematic diagram of another setting mode of the parameter EHT Operation according to the embodiment of the present application.
Fig. 7 is a schematic diagram of a setting mode of local information according to an embodiment of the present application;
Fig. 8 is a schematic diagram of a message setting mode according to Embodiment 2 of the present application.
Fig. 9 is a schematic diagram of a message setting mode according to Embodiment 3 of the present application.

### Detailed Description of the Embodiments

The technical solutions of the present application are described below in combination with the accompanying drawings.

In the embodiments of the present application, the words like "exemplarily" and "for example" are used to serve as example, example illustration or explanation. Any embodiments or designs described as "example" in the present application shall not be construed as being preferred or superior to other embodiments or designs. More exactly, the purpose of using the word "example" is to present the concept in a specific way.

In the embodiments of the present application, "information", "signal", "message", "channel", and "signaling" may sometimes be used together. It is to be pointed out that when the difference among them is not emphasized, the meanings these words to be expressed are the same. "Of", "corresponding, relevant" and "corresponding" may sometimes be used together. It is to be point out that when the difference among them is not emphasized, the meanings these words to be expressed are the same.

In order to make the objectives, technical solutions, and advantages of the present application more clearly, the present application is further described in detail below with reference to specific embodiments. It is to be understood that the specific embodiments described here are only used for explaining the present application, but not for limiting the present application.

In the following embodiments, STA represents a terminal in the 802.11 wireless local area network, and Access Point (AP) represents an access point of the 802.11 wireless local area network, which is a type of network access devices. In other embodiments, the network access device may also be other devices such as a router. The following only uses AP as an embodiment for description.

### Embodiment 1

The embodiment provides a method for a terminal to transmit and receive data on multi-link, including the following steps.

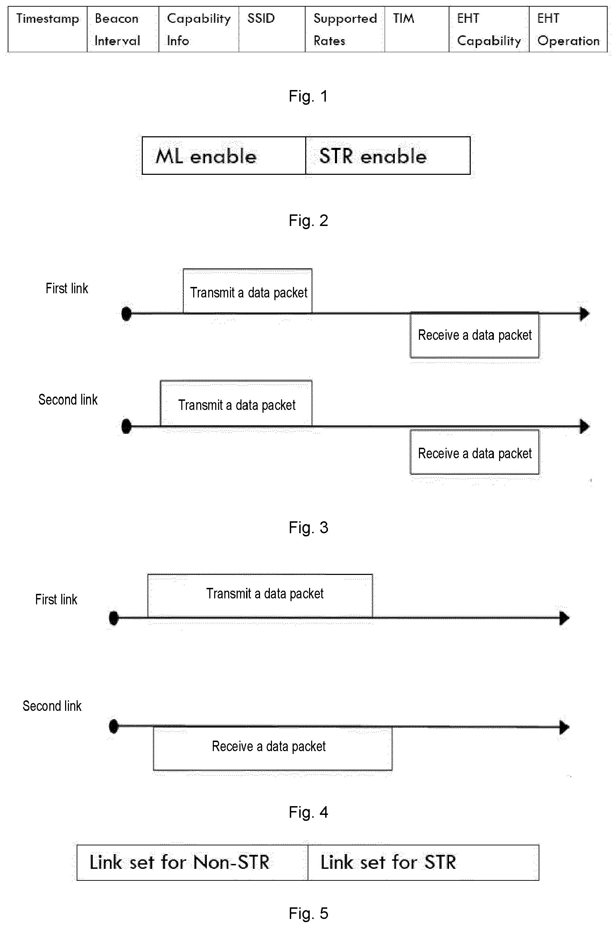

At S101, AP sends a Beacon message, and the Beacon message is broadcast across the entire network. The message contains parameters EHT Capability and EHT Operation. Exemplarily, the parameters contained in the message are shown in Fig. 1.

In the figure:
Timestamp: Time stamp, used to synchronize master timers of workstation BSS among Basic Service Sets (BSS).

Beacon Interval: AP will send out a Beacon signal every once in a while to announce the existence of the 802.11 network. This field is used to set the time unit between Beacon signals. The time unit is usually abbreviated as TU, which represents 1024 microseconds, being equivalent to 1 millisecond. Beacon is generally set with 100 time units, which is equivalent to transmitting a Beacon signal every 100 milliseconds, i.e., 0.1 second.

Capability Info: Capability Information with a length of 16 bits. When sending a Beacon signal, it is used to inform all parties of what capabilities the network has. Because the newly evolved 802.11 be network requires compatibility with a network terminal in previous versions, this field is used to inform basic compatibility of the network in previous versions, for example, whether to support real-time Block Ack, whether to support QoS settings, whether to support short codes, and whether to support short slot time.

SSID: Service Set Identifier.

Supported Rates: The 802.11 network may use information elements of the Supported Rates to specify their supported rates.

Traffic Indication Map (TIM): A base station may temporarily store frames for a workstation in a sleep state. From time to time, the base station may try to deliver these temporary storage frames to the sleep workstation.

Extremely High Throughput (EHT Capability, which is a description of special effects of the 802.11 be network) indicates a multi-link transmitting and receiving capability of the network access device, containing the subfields ML enable and STR enable. Exemplarily, the setting is as shown in Fig. 2.

ML enable indicates whether the network access device supports a multi-link operation or not, for example, when set to 0, it indicates supporting a single-link operation, and when set to 1, it indicates supporting a multi-link operation.

STR enable indicates a multi-link mode that the network access device supports. The supported multi-link mode includes a mode supporting multi-link simultaneous receiving or simultaneous transmitting, and a mode supporting multi-link independently simultaneous transmitting and receiving.

Fig. 3 is a schematic diagram showing multi-link simultaneous receiving or simultaneous transmitting. As shown in FIG. 3, multi-link simultaneous receiving or simultaneous transmitting refers to that while transmitting data on one link, the other link may only transmit data; while receiving data on one link, the other link may only receive data. The time of transmitting or receiving may not be started synchronously, but the transmitting period and the receiving period do not overlap. A device having this capability is also referred to as a constrained multi-link device (constrained MLD).

Fig. 4 is a schematic diagram showing multi-link independently simultaneous transmitting and receiving. As shown in Fig. 4, multi-link independently simultaneous transmitting and receiving refers to that while transmitting data on one link, the other link may receive data, the two links are independently controlled on receiving and transmitting of data, and do not affect each other. A device having this capability is also referred to as a non-constrained multi-link device (non-constrained MLD).

Exemplarily, the subfield STR enable in the parameter EHT Capability is valid when ML enable indicates that the network access device supports a multi-link operation. For example, the subfield is valid when ML enable is set to 1; when ML enable is set to 0, it indicates supporting multi-link simultaneous receiving or simultaneous transmitting, and when ML enable is set to 1, it indicates supporting multi-link independently simultaneous transmitting and receiving.

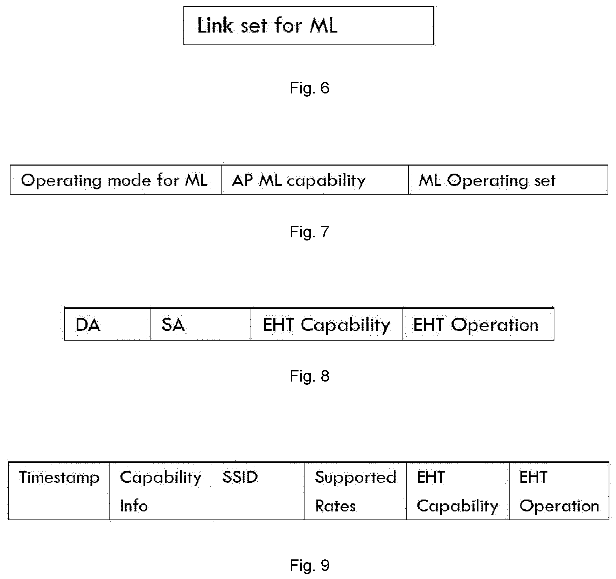

EHT Operation indicates a multi-link operating mode of the network access device, containing subfields Link set for Non-STR and Link set for STR, or containing a subfield Link set for ML. Exemplarily, the settings are respectively shown in Fig. 5 and Fig. 6.

Link set for Non-STR is used for indicating a link set on which the terminal may perform multi-link simultaneous receiving or simultaneous transmitting in the mode of supporting multi-link simultaneous receiving or simultaneous transmitting. Exemplarily, the link set may be based on links, for example, {link1, link2}, herein link 1 and link 2 respectively indicate a first link and a second link, or may be based on operating frequency bands, for example, {2.4GHZ, 5GHZ, 6GHZ}, or {2.4GHZ, 5GHZ}, or {2.4GHZ, 6GHZ}, or {5GHZ, 6GHZ}, or based on operating wavebands of each frequency band, herein the waveband is indicated by two parameters: center frequency and bandwidth, for example, {(2.45GHZ, 40MHZ), (5.45GHZ, 80MHZ), or (6.45GHZ, 160MHZ)}.

Link set for STR is used for indicating a link set on which the terminal may perform multi-link independently simultaneous transmitting and receiving in the mode of supporting multi-link independently simultaneous transmitting and receiving, exemplarily, the link set may be based on links, for example, {link1, link2}, herein link1 and link2 respectively indicate a first link and a second link, or based on operating frequency bands, for example, {2.4GHZ, 5GHZ}, Or {2.4GHZ, 6GHZ}, or may also be based on operating wavebands of each frequency band, herein the waveband is indicated by two parameters: center frequency and bandwidth, for example {(2.45GHZ, 40MHZ), or (6.45GHZ, 160MHZ)}.

Link set for ML is used for indicating a link set on which the terminal may perform multi-link operation. Exemplarily, the link set may be based on links, for example, {link1, link2}, herein link 1 and link 2 respectively indicate a first link and a second link, or may be based on operating frequency bands, for example, {2.4GHZ, 5GHZ, 6GHZ}, or {2.4GHZ, 5GHZ}, or {2.4GHZ, 6GHZ}, or {5GHZ, 6GHZ}, or based on operating wavebands of each frequency band, herein the waveband is indicated by two parameters: center frequency and bandwidth, for example, {(2.45GHZ, 40MHZ), (5.45GHZ, 80MHZ), or (6.45GHZ, 160MHZ)}.

At S102, STA monitors and reads a broadcast message, and selects to connect to the AP, and then sets local information according to the parameter EHT Capability and its subfields as well as the parameter EHT Operation and its subfields. The local information includes parameters Operating mode for ML, AP ML capability, and ML Operating set, the Operating mode for ML indicates that whether the network access device supports a multi-link operation or not, the AP ML capability indicates a multi-link mode that the network access device supports, and the ML Operating set indicates an available link. Exemplarily, the setting is as shown in Fig. 7.

Exemplarily, a method for setting local information includes the following operations.

If ML enable is 0, a parameter value of the Operating mode for ML is set to Single link which indicates a single link.

If ML enable is 1, a parameter value of the Operating mode for ML is set to Multi-link which indicates multiple links.

If ML enable is 1, and STR enable is 0, a parameter value of the AP ML capability is set to Non-STR which indicates multi-link simultaneous receiving or simultaneous transmitting.

If ML enable is 1, and STR enable is 1, a parameter value of the AP ML capability is set to STR which indicates multi-link independently simultaneous transmitting and receiving.

If ML enable is 1, the terminal supports multi-link independently simultaneous transmitting and receiving, and STR enable is 1, a parameter value of the ML Operating set is set to a value of Link set for STR or Link set for ML.

If ML enable is 1, the terminal supports multi-link independently simultaneous transmitting and receiving, and STR enable is 0, a parameter value of the ML Operating set is to a value of Link set for Non-STR or Link set for ML.

If ML enable is 1, the terminal supports multi-link simultaneous receiving or simultaneous transmitting, a parameter value of ML Operating set is to a value of Link set for Non-STR or Link set for ML.

At S103, the terminal performs data transmitting and receiving according to local information. The following are examples.

If the value of Operating mode for ML is Single link, data transmitting and receiving is performed on a single link. Exemplarily, if the terminal performs transmitting and receiving on the single link currently, transmitting and receiving is still performed on the original single link; if the terminal performs transmitting and receiving on multiple links currently, one of a link, or a frequency band, or a waveband indicated in ML Operating set is selected for transmitting and receiving.

If the value of Operating mode for ML is Multi-link, the terminal supports multi-link independently simultaneous transmitting and receiving, and a value of AP ML capability is Non-STR, multi-link simultaneous receiving or simultaneous transmitting of data is performed according to a link, or a frequency band, or a waveband indicated in ML Operating set.

If the value of Operating mode for ML is Multi-link, the terminal supports multi-link independently simultaneous transmitting and receiving, and the value of AP ML capability is STR, multi-link independently simultaneous transmitting and receiving of data is performed according to a link, or a frequency band, or a waveband indicated in ML Operating set.

If the value of Operating mode for ML is Multi-link, and the terminal supports multi-link simultaneous receiving or simultaneous transmitting, multi-link simultaneous receiving or simultaneous transmitting of data is performed according to a link, or a frequency band, or a waveband indicated in ML Operating set.

### Embodiment 2

At S201, AP sends a trigger message, and the trigger message may be sent to a single STA, or to a STA group. The message contains parameters EHT Capability and EHT Operation. Exemplarily, the parameters contained in the message are shown in Fig. 8.

In the figure:
DA: A destination address to receive this message.
SA: A source address that sends this message.

Settings of the parameters EHT Capability and EHT Operation may refer to Embodiment 1, which will not be elaborated here.

At S202, STA receives the trigger message, and performs data transmitting and receiving according to the parameter EHT Capability and its subfields as well as the parameter EHT Operation and its subfields. The following are examples.

If ML enable is 0, data transmitting and receiving is performed on a single link. Exemplarily, if the terminal performs transmitting and receiving on the single link currently, transmitting and receiving is stilled performed on the original single link; if the terminal performs transmitting and receiving on multiple links currently, one of a link, or a frequency band, or a waveband indicated in Link set for Non-STR or Link set for ML is selected for transmitting and receiving.

If ML enable is 1, the terminal supports multi-link independently simultaneous transmitting and receiving, and STR enable is 1, multi-link independently simultaneous transmitting and receiving of data is performed according to a link, or a frequency band, or a wave band indicated in Link set for STR or Link set for ML.

If ML enable is 1, the terminal supports multi-link independently simultaneous transmitting and receiving, and STR enable is 0, multi-link simultaneous receiving or simultaneous transmitting of data is performed according to a link, or a frequency band, or a wave band indicated in Link set for Non-STR or Link set for ML.

If ML enable is 1, the terminal supports multi-link simultaneous receiving or simultaneous transmitting, multi-link simultaneous receiving or simultaneous transmitting of data is performed according to a link, or a frequency band, or a wave band indicated in Link set for Non-STR or Link set for ML.

### Embodiment 3

At S301, STA sends a probe request message.

At S302, AP sends a probe response message to STA, the message containing parameters EHT Capability and EHT Operation. Exemplarily, the parameters contained in the message are as shown in Fig. 9.

In the figure:
Timestamp: Time stamp, used to synchronize master timers of workstation BSS among Basic Service Sets (BSS).

Capability Info: Capability Information with a length of 16 bits. When sending a Beacon signal, it is used to inform all parties of what capabilities the network has. Because the newly evolved 802.11 be network requires compatibility with a network terminal in previous versions, this field is used to inform basic compatibility of the network in previous versions, for example, whether to support real-time Block Ack, whether to support QoS settings, whether to support short codes, and whether to support short slot time.

SSID: Service Set Identifier.

Supported Rates: The 802.11 network may use information elements of the Supported Rates to specify their supported rates.

Settings of the parameters EHT Capability and EHT Operation may refer to Embodiment 1, which will not be elaborated here.

At S303, STA receives the probe response message, and selects to connect to the AP, and sets local information according to the parameter EHT Capability and its subfields as well as the parameter EHT Operation and its subfields. The setting and setting method of the local information may refer to Embodiment 1, which will not be elaborated here.

At S304, the terminal performs data transmitting and receiving according to local information. The following are examples.

If a value of Operating mode for ML is Single link, data transmitting and receiving is performed on a single link. Exemplarily, if the terminal performs transmitting and receiving on the single link currently, transmitting and receiving is still performed on the original single link; if the terminal performs transmitting and receiving on multiple links currently, one of a link, or a frequency band, or a waveband indicated in the ML Operating set is selected for transmitting and receiving.

If the value of Operating mode for ML is Multi-link, the terminal supports multi-link independently simultaneous transmitting and receiving, and a value of the AP ML capability is Non-STR, multi-link simultaneous receiving or simultaneous transmitting of data is performed according to a link, or a frequency band, or a waveband indicated in ML Operating set.

If the value of Operating mode for ML is Multi-link, the terminal supports multi-link independently simultaneous transmitting and receiving, and the value of AP ML capability is STR, multi-link independently simultaneous transmitting and receiving of data is performed according to a link, or a frequency band, or a waveband indicated in ML Operating set.

If the value of Operating mode for ML is Multi-link, and the terminal supports multi-link simultaneous receiving or simultaneous transmitting, multi-link simultaneous receiving or simultaneous transmitting of data is performed according to a link, or a frequency band, or a waveband indicated in ML Operating set.

### Embodiment 4

The embodiment provides a terminal, including a data transmitting and receiving device. The data transmitting and receiving device is configured to perform the method for a terminal to transmit and receive data on multi-link as described in any of the possible implementation manners in Embodiment 1 to Embodiment 3.

All or part of the above embodiments may be implemented by software, hardware (e.g., circuits), firmware or any other combinations. In case of implementation with the software, all or part of the above embodiments may be implemented in form of a computer program product. The computer program product includes one or more computer instructions or computer programs. When the computer instructions or computer programs are loaded or executed on a computer, the flows or functions according to the embodiments of the present application are all or partially formed. The computer may be a universal computer, a dedicated computer, a computer network or another programmable device. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wireless (for example, infrared, radio and microwave) manner. The computer-readable storage medium may be any available medium accessible for the computer or data storage equipment including one or more integrated available media such as a server and a data center. The available medium may be a magnetic medium (for example, a floppy disk, a hard disk, and a magnetic tape), an optical medium (for example, a Digital Versatile Disc (DVD), or a semiconductor medium. The semiconductor medium may be a solid state drive.

It is to be understood that, in various embodiments of the present application, a magnitude of a sequence number of each process does not mean an execution sequence, part or all of the steps can be executed in parallel or in sequence, and the execution sequence of each process should be determined by its function and an internal logic and should not form any limit to an implementation process of the embodiments of the present application.

Those of ordinary skill in the art may realize that the units and algorithm steps of each example described in combination with the embodiments disclosed in the present application may be implemented by electronic hardware or a combination of computer software and the electronic hardware. Whether these functions are executed in a hardware or software manner depends on specific applications and design constraints of the technical solutions. Those skilled in the art may realize the described functions for each specific application by use of different methods, but such realization shall fall within the scope of the present application.

Those skilled in the art may clearly learn about that specific working processes of the system, device, and unit described above may refer to the corresponding processes in the method embodiment and will not be elaborated herein for convenient and brief description

In some embodiments provided by the present application, it is to be understood that the disclosed system, device, and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present application may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the application substantially or parts making contributions to the conventional art or part of the technical solutions may be embodied in form of software product, and the computer software product is stored in a storage medium, including multiple instructions configured to enable a computer device (which may be a personal computer, a server, a network device or a terminal device, etc.) to execute all or part of the steps of the method in each embodiment of the application. The storage media include: various media capable of storing program codes such as a USB flash disk, a mobile hard disk, a ROM, a RAM, a magnetic disk, or a compact disc.

The terms used in the embodiments of the present application are for the purpose of describing particular embodiments only and are not intended to limit the present application. The singular forms "a", "an" and "the" used in the embodiments of the present application and the appended claims of the present application are also intended to include the plural forms unless the context clearly indicates otherwise. It is also to be understood that the term "and/or" as used herein refers to and includes any or all possible combinations of one or more of the associated listed items. The character "/" in the present application usually indicates that previous and next associated objects form an "or" relationship.

The term "if" or "in case" used here may be explained as "while" or "when" or "responsive to determining" or "responsive to detecting", which depends on the context. Similarly, based on the context, phrase "if determining" or "if detecting (stated condition or event)" may be explained as "when determining" or "responsive to determining" or "when detecting (stated condition or event)" or "responsive to detecting (stated condition or event)".

Those of ordinary skill in the art may understand that all or part of the steps in the method of the above embodiment may be completed through related hardware instructed by a program, the program may be stored in a readable storage medium of a device, and when the program is executed, all or part of the steps are included. The stored media are, for example, FLASH, EEPROM, etc.

The above are only the specific implementation manners of the present application and not intended to limit the scope of protection of the present application. Any variations or replacements apparent to those skilled in the art within the technical scope disclosed by the present application shall fall within the scope of protection of the present application. Therefore, the scope of protection of the present application shall be subject to the scope of protection of the claims.

## Claims

1. A method for a terminal to transmit and receive data on multi-link, comprising:
receiving a message sent from a network access device, the message containing parameters EHT Capability and EHT Operation, wherein
the parameter EHT Capability indicates a multi-link transmitting and receiving capability of the network access device, containing subfields ML enable and STR enable; ML enable indicates that whether the network access device supports a multi-link operation or not, STR enable indicates a multi-link mode that the network access device supports, and the supported multi-link mode comprises a mode supporting multi-link simultaneous receiving or simultaneous transmitting, and a mode supporting multi-link independently simultaneous transmitting and receiving;
the parameter EHT Operation indicates a multi-link operating mode of the network access device, containing subfields Link set for Non-STR and Link set for STR, wherein Link set for Non-STR is used for indicating a link set on which the terminal is able to perform multi-link simultaneous receiving or simultaneous transmitting in the mode of supporting multi-link simultaneous receiving or simultaneous transmitting, and Link set for STR is used for indicating a link set on which the terminal is able to perform multi-link independently simultaneous transmitting and receiving in the mode of supporting multi-link independently simultaneous transmitting and receiving; or containing a subfield Link set for ML that is used for indicating a link set on which the terminal is able to perform multi-link operation; and
performing data transmitting and receiving according to the parameter EHT Capability and the subfields of the parameter EHT Capability as well as the parameter EHT Operation and the subfields of the parameter EHT Operation.

2. The method for a terminal to transmit and receive data on multi-link according to claim 1, wherein the message refers to a Beacon message, or a trigger message, or a probe response message.

3. The method for a terminal to transmit and receive data on multi-link according to claim 1, wherein a method for performing data transmitting and receiving according to the parameter EHT Capability and the subfields of the parameter EHT Capability as well as the parameter EHT Operation and the subfields comprises of the parameter EHT Operation:
setting local information according to the parameter EHT Capability and the subfields of the parameter EHT Capability as well as the parameter EHT Operation and the subfields of the parameter EHT Operation, and performing data transmitting and receiving according to the local information, wherein the local information contains parameters Operating mode for ML,
AP ML capability, and ML Operating set, Operating mode for ML indicates that whether the network access device supports a multi-link operation or not, AP ML capability indicates a multi-link mode that the network access device supports, and ML Operating set indicates an available link.

4. The method for a terminal to transmit and receive data on multi-link according to claim 3, wherein a method for setting local information comprises:
when the ML enable indicates supporting a single-link operation, setting a parameter value of the Operating mode for ML to Single link which indicates a single link;
when the ML enable indicates supporting a multi-link operation, setting a parameter value of the Operating mode for ML to Multi-link which indicates multiple links;
when the ML enable indicates supporting a multi-link operation, and the STR enable indicates supporting multi-link simultaneous receiving or simultaneous transmitting, setting a parameter value of the AP ML capability to Non-STR which indicates multi-link simultaneous receiving or simultaneous transmitting;
when the ML enable indicates supporting a multi-link operation, and STR enable indicates supporting multi-link independently simultaneous transmitting and receiving, setting a parameter value of the AP ML capability to STR which indicates multi-link independently simultaneous transmitting and receiving;
when the ML enable indicates supporting a multi-link operation, the terminal supports multi-link independently simultaneous transmitting and receiving, and STR enable indicates supporting multi-link independently simultaneous transmitting and receiving, setting a parameter value of the ML Operating set to a value of Link set for STR or Link set for ML;
when the ML enable indicates supporting a multi-link operation, the terminal supports multi-link synchronous independent receiving and transmitting, and STR enable indicates supporting multi-link simultaneous receiving or simultaneous transmitting, setting a parameter value of the ML Operating set to a value of Link set for Non-STR or Link set for ML; and
when ML enable indicates supporting a multi-link operation, and the terminal supports multi-link simultaneous receiving or simultaneous transmitting, setting a parameter value of the ML Operating set to a value of Link set for Non-STR or Link set for ML.

5. The method for a terminal to transmit and receive data on multi-link according to claim 4, wherein a method for performing data transmitting and receiving according to local information comprises:
when the value of Operating mode for ML is Single link, performing data transmitting and receiving on a single link;
when the value of Operating mode for ML is Multi-link, the terminal supports multi-link independently simultaneous transmitting and receiving, and the value of AP ML capability is Non-STR, performing multi-link simultaneous receiving or simultaneous transmitting of data according to a link, or a frequency band, or a waveband indicated in the ML Operating set;
when the value of Operating mode for ML is Multi-link, the terminal supports multi-link independently simultaneous transmitting and receiving, and the value of AP ML capability is STR, performing multi-link independently simultaneous transmitting and receiving of data according to a link, or a frequency band, or a waveband indicated in ML Operating set; and
when the value of Operating mode for ML is Multi-link, and the terminal supports multi-link simultaneous receiving or simultaneous transmitting, performing multi-link simultaneous receiving or simultaneous transmitting of data according to a link, or a frequency band, or a waveband indicated in ML Operating set.

6. The method for a terminal to transmit and receive data on multi-link according to claim 1, wherein a method for performing data transmitting and receiving according to the parameter EHT Capability and the subfields of the parameter EHT Capability as well as the parameter EHT Operation and the subfields of the parameter EHT Operation comprises:
when the ML enable indicates supporting a single-link operation, performing data transmitting and receiving on a single link;
when the ML enable indicates supporting a multi-link operation, the terminal supports multi-link independently simultaneous transmitting and receiving, and the STR enable indicates supporting multi-link independently simultaneous transmitting and receiving, performing multi-link independently simultaneous transmitting and receiving of data according to a link, or a frequency band, or a wave band indicated in Link set for STR or Link set for ML;
when the ML enable indicates supporting a multi-link operation, the terminal supports multi-link independently simultaneous transmitting and receiving, and the STR enable indicates supporting multi-link independently simultaneous transmitting or receiving, performing multi-link simultaneous receiving or simultaneous transmitting of data according to a link, or a frequency band, or a wave band indicated in Link set for STR or Link set for ML; and
when the ML enable indicates supporting a multi-link operation, and the terminal supports multi-link simultaneous receiving or simultaneous transmitting, performing multi-link simultaneous receiving or simultaneous transmitting of data according to a link, or a frequency band, or a wave band indicated in Link set for Non-STR or Link set for ML.

7. The method for a terminal to transmit and receive data on multi-link according to claim 5, wherein a method for performing data transmitting and receiving on a single link comprises:
when the terminal performs transmitting and receiving on the single link currently, still performing transmitting and receiving on the original single link; when the terminal performs transmitting and receiving on multiple links currently, selecting one of a link, or a frequency band, or a waveband indicated in ML Operating set for transmitting and receiving.

8. The method for a terminal to transmit and receive data on multi-link according to claim 6, wherein a method for performing data transmitting and receiving on a single link comprises:
when the terminal performs transmitting and receiving on the single link currently, still performing transmitting and receiving on the original single link; when the terminal performs transmitting and receiving on multiple links currently, selecting one of a link, or a frequency band, or a waveband indicated in Link set for Non-STR or Link set for ML for transmitting and receiving.

9. The method for a terminal to transmit and receive data on multi-link according to claim 1, wherein the subfield STR enable in the parameter EHT Capability is valid when ML enable indicates that the network access device supports a multi-link operation.

10. A terminal, comprising a data transmitting and receiving device, wherein the data transmitting and receiving device is configured to perform the method for a terminal to transmit and receive data on multi-link according to any of claims 1 to 9.
